# EUROPEAN PATENT SPECIFICATION

(11) **EP 2 899 858 B1**
(45) Date of publication and mention of the grant of the patent: **02.10.2019**
(21) Application number: 14152497.5
(22) Date of filing: 24.01.2014
(51) Int. Cl.: H02K 9/04, H02K 7/18

(54) **Electric generator arrangement with improved cooling system and operating method thereto**
Elektrische Generatoranordnung mit verbessertem Kühlsystem und Betriebsverfahren dafür
Agencement de générateur électrique avec système de refroidissement amélioré et procédé d'exploitation à celui-ci

(43) Date of publication of application: 29.07.2015
(73) Proprietor: Siemens Gamesa Renewable Energy A/S, 7330 Brande (DK)
(72) Inventor: Airoldi, Giovanni, 7330 Brande (DK)
(74) Representative: Aspacher, Karl-Georg

(56) References cited:
- EP-A1- 2 234 246
- EP-A1- 2 642 639
- CN-U- 201 699 532
- JP-A- S59 220 045

## Description

### Field of invention

The present invention relates to an electric generator arrangement, comprising a stator, a rotor and a plurality of cooling fans, which in their active state cause air flows through a rotor stator gap between said rotor and said stator and through stator gaps between axially adjacent segments of said stator, wherein said air flows are directed through the stator gaps in the same direction. Furthermore, the invention relates to a method for operating said electric generator arrangement.

### Art Background

Electric generator arrangements of the kind above and operating methods thereto are generally known. By means of the fans, air is blown through the rotor stator gap and the stator gaps to cool the generator. If the generator is operated at high power and at high outside temperatures, all available cooling fans are activated. However, the generator temperature varies depending on power output and on ambient temperature. In certain conditions (e.g. at low wind speeds in case of a generator driven by a wind turbine, at low ambient temperature and/or at low power production) it is not necessary to operate all fans at the same time.

However, if a fan is switched off, the air flow through that specific fan may be reversed because the pressure in the stator cavity can get lower than at the end winding manifold, when at least one fan is active. Accordingly, a part of the air flow generated by the active fans passes through an inactive fan without going through the rotor stator gap and the stator gaps. Hence, the efficiency of the cooling system is comparably low, in particular in case of part load. Accordingly, there is a need to provide an electric generator arrangement and an operating method thereto, which provide an improved efficiency of the cooling system.

Electric generator arrangements of the above described type are disclosed in EP 2642639 A1, JP S59 220045 A and EP 2234246 A1.

### Summary of the Invention

This need may be met by the subject matter according to the independent claims. Advantageous embodiments of the present invention are described by the dependent claims.

According to a first aspect of the invention, there is provided an electric generator arrangement as disclosed in the first independent claim.

Moreover, there is provided a method of controlling an electric generator arrangement, which comprises a stator, a rotor, a first plurality of cooling fans in a first axial end region of the generator arrangement, which in their active state causes a first air flow through said rotor stator gap and through said stator gaps between segments of said stator via the first axial end region and a second plurality of cooling fans in an opposing second axial end region of the generator arrangement, which in its active state causes a second air flow through said rotor stator gap and said stator gaps via the opposing second axial end region, wherein said air flows are directed through the stator gaps in the same direction and wherein a flap is arranged in the air flow of at least one fan, comprising the step of activating/deactivating at least a part of the fans depending on a temperature of the generator arrangement, wherein the number of active fans increases when said temperature rises and vice versa, said control,
opening a flap of a fan when said fan is activated, and closing it when said fan is deactivated.

This aspect of the invention is based on the idea that a reverse flow through an inactive fan is avoided. Hence, the complete air flow generated by the active fans passes through the rotor stator gap and the stator gaps. By these measures the efficiency of the cooling system is increased.

According to the invention, the electric generator arrangement comprises
- a first plurality of cooling fans in a first axial end region of the generator arrangement, which in their active state causes a first air flow through a rotor stator gap between said rotor and said stator and through said stator gaps between axially adjacent segments of said stator via the first axial end region and
- a second plurality of cooling fans in an opposing second axial end region of the generator arrangement, which in its active state causes a second air flow through said rotor stator gap and said stator gaps via the opposing second axial end region.

In this way, the cooling of the generator is homogeneous, as an air flow is generated at both axial ends of the generator.

According to the invention, there is provided a control being arranged to activate/deactivate at least a part of the fans depending on a temperature of the generator arrangement, in particular depending on a temperature of the stator, wherein the number of active fans increases when said temperature rises and vice versa. In this way the overall energy consumption of the cooling system may be reduced.

According to the invention, said control is designed to open the flap associated with a fan when said fan is activated, and close it when said fan is deactivated. In this way, the air flow may be flexibly controlled, as an flap is actively opened or closed. For example, the flap may be equipped with an electric actuator which causes a change state of the flap.

According to an embodiment not part of the claimed invention, said flap is designed as a non-return flap. No dedicated control for the flaps is needed as they open and close in line with the activation/deactivation of the associated fan.

According to another embodiment of the invention, flaps are arranged in the air flows of those fans, which may be deactivated by said control before all fans are switched off. In this way, the number of flaps can be reduced. If for example two fans are active before all fans are switched off, n-2 fans are advantageously equipped with flaps.

According to yet another embodiment of the invention, flaps are arranged in the air flows of all said fans. Hence, an electric generator arrangement is obtained, whose fans can flexibly turned on and off. For example, the usage and thus wear of the fans and their motors can be balanced by alternating the groups of fans being activated/deactivated depending on a temperature of the generator arrangement.

According to a further embodiment of the invention, said flap is made of reinforced plastic, in particular made of fiberglass reinforced polyamide. Thus, an lightweight but nevertheless stable flap is obtained.

According to yet another embodiment of the invention, said fans are arranged inside of the stator. In this way, a compact electric generator arrangement is obtained. However, the fans may also be arranged outside of the generator.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

Figure 1 shows a schematic cross section of an exemplary electric generator arrangement;
Figure 2 shows an oblique view of an exemplary fan;
Figure 3 shows an oblique view of the arrangement of the fans and
Figure 4 shows an exemplary electric generator arrangement equipped with a control.

### Detailed Description

The illustration in the drawing is schematically. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

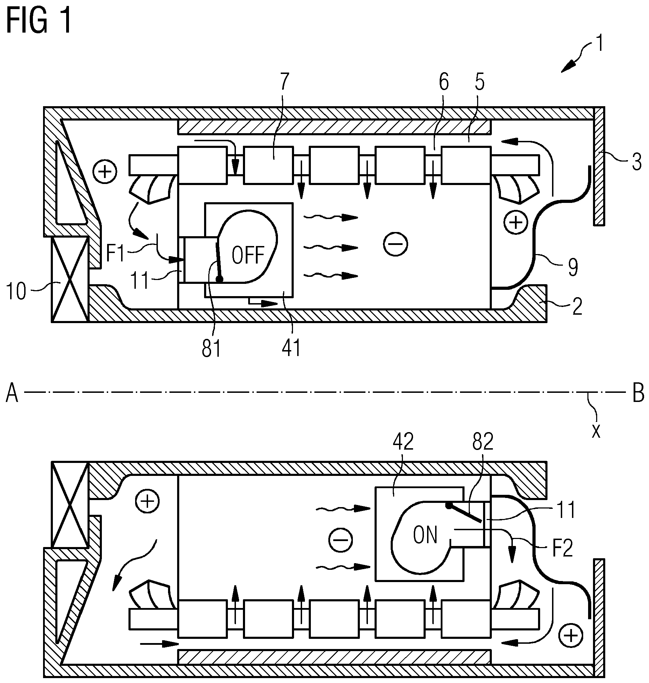

Fig. 1 shows a schematic cross section of an exemplary electric generator arrangement 1, which comprises a stator 2, a rotor 3 and a plurality of cooling fans 41, 42. In their active state the cooling fans 41, 42 cause air flows F1, F2 through a rotor stator gap 5 between said rotor 3 and said stator 2 and through stator gaps 6 between axially adjacent segments 7 of said stator 2, wherein the air flows F1, F2 are directed through the stator gaps 6 in the same direction. In addition flaps 81, 82 are arranged in the air flows F1, F2 of the fans 41, 42 opening in the active state of said fan 41, 42, in particular only in said active state.

Moreover, Fig. 1 shows an axis x of the generator arrangement 1, a housing 9, a bearing 10 and optional protection grids 11 in the air flows F1, F2 of the fans 41, 42.

In this particular example, the cooling fan 41 in its active state causes a first air flow F1 through a rotor stator gap 5 between said rotor 3 and said stator 2 and through stator gaps 6 between segments 7 of said stator 2 via a first axial end region A of the generator/generator arrangement 1. The second cooling fan 42 in its active state causes a second air flow F2 through said rotor stator gap 5 and said stator gaps 6 via an opposing second axial end region B of the
generator arrangement 1.

According to examples not part of the claimed invention, the flaps 81, 82 may be designed as non-return flaps, which automatically open when a fan 41, 42 is activated and automatically close when a fan 41, 42 is deactivated. The flaps 81, 82 can be made of reinforced plastic, in particular made of fiberglass reinforced polyamide.

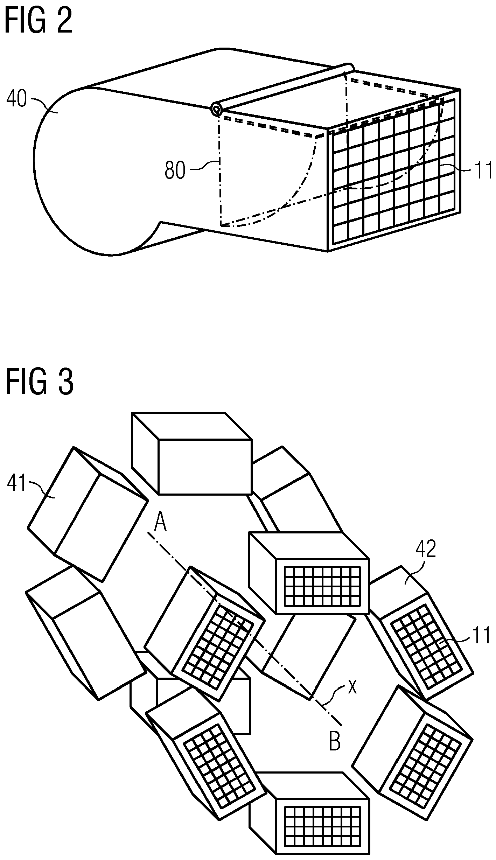

Fig. 2 shows an oblique view of an exemplary fan 40 with a flap 80 and a protection grid 11.

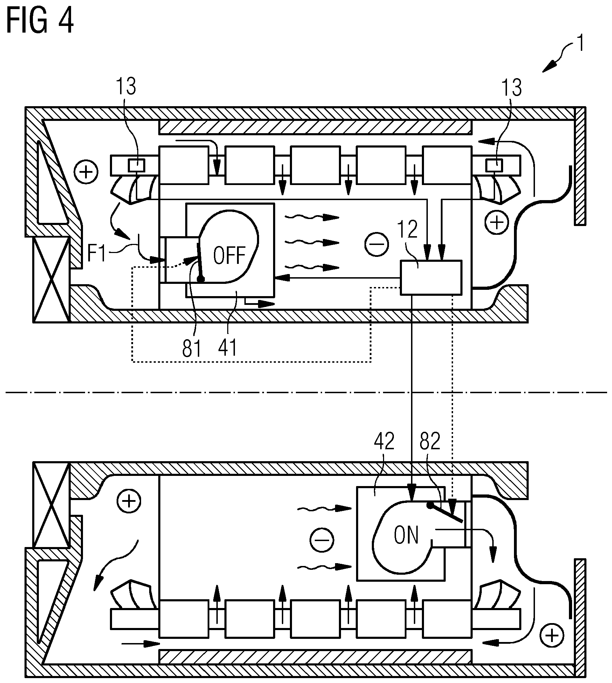

Fig. 3 shows an oblique view of the arrangement of the fans 41, 42. Six fans 41 are arranged in the first axial end region A of the generator arrangement 1, and six fans 42 are arranged in the second axial end region B of the generator arrangement 1. It should be noted that in Fig. 1 (and also in Fig. 4) just one fan 41 and one fan 42 is shown for the sake of simplicity.

It should also be noted that any other number of fans 41, 42 and any other arrangement of the same may be applicable as well. It is even possible to arrange the fans 41, 42 outside of the generator. In both cases, the generator arrangement 1 comprises the generator itself and the fans 41, 42. If the fans 41, 42 are arranged inside of the generator, the generator and the generator arrangement 1 is the same.

The function of the generator arrangement 1 is as follows:
The generator arrangement 1 is cooled with all twelve fans 41, 42 if the generator is operated at high (maximum) power and at high outside temperatures. However, the generator temperature varies depending on power output and on ambient temperature. In certain conditions (e.g. at low wind speeds in case of the generator being driven by a wind turbine, at low ambient temperature and/or at low power production) it is not necessary to operate all fans 41, 42 at the same time. For this reason, a control strategy is applied, which controls how many fans 41, 42 are operating depending on the temperature of the generator arrangement 1, in particular depending on the temperature of the stator 2 and/or of the end winding.

Hence a control can activate/deactivate at least a part of the fans 41, 42 depending on a temperature of the
generator arrangement 1, wherein the number of active fans 41, 42 increases when said temperature rises and vice versa (see also Fig. 4). For example it may provided that three, six, nine or twelve fans 41, 42 are active at the same time. If for example three fans 41, 42 are active, there may be three active fans 41 in the first axial end region A, three active fans 42 in the second axial end region B, two active fans 41 in the first axial end region A and one active fan 42 in the second axial end region B or one active fan 41 in the first axial end region A and two active fans 42 in the second axial end region B. However, any number of fans 41, 42 and any other strategy activating a particular subset of the fans 41, 42 may be applicable as well.

If a fan 41, 42 is switched off, the air flow F1, F2 through that specific fan 41, 42 may be reversed without taking special measures, because the pressure in the stator cavity can get lower than at the end winding manifold, when at least one fan 41, 42 is active (see also the plus sign respectively the minus sign in Fig. 1). To avoid that a part of the air flow F1, F2 generated by the active fans 41, 42 passes through an inactive fan 41, 42 without going through the rotor stator gap 5 and the stator gaps 6, the flaps 81, 82 are provided. In the example shown in Fig. 1 the fan 41 is OFF and the fan 42 is ON. Thus, the flap 81 is closed and the flap 82 is open.

Accordingly, a method of controlling an electric generator arrangement 1 is provided, wherein a flap 81, 82, which is associated with a fan 41, 42, is opened when said fan 41, 42 is activated. And it is closed when said fan 41, 42 is deactivated. By these measures, the efficiency of the cooling system is increased.

Flaps 81, 82 may be provided in the air flows F1, F2 of all fans 41, 42. However, in an advantageous embodiment of the generator arrangement 1, flaps 81, 82 are arranged in the air flows F1, F2 of those fans 41, 42, which may be deactivated by said control before all fans 41, 42 are switched off. In case of the control strategy mentioned above, three fans 41, 42 are active before all fans 41, 42 are switched off. Accordingly, it is advantageous if the remaining nine fans 41, 42 are equipped with flaps 81, 82.

Fig. 4 shows a schematic view of a generator arrangement 1 equipped with a control 12, activating/deactivating the fans 41, 42 depending on a temperature of the generator arrangement 1, wherein the number of active fans 41, 42 increases when said temperature rises and vice versa. For this reason, the control 12 is connected to the fans 41 and 42 as well as to a temperature sensor 13 measuring the temperature in the stator cavity. In particular, there is a plurality of temperature sensors 13 on or in the end windings. The fans 41, 42 are preferably controlled by the highest value measured by the temperature sensors 13 (indicating the hot spot of the generator arrangement 1). Up to now the function of the cooling system was explained by reference to non-return flaps, which are not part of the claimed invention. However, it is also possible, that the flaps 80..82 are equipped with an actor and actively opened and closed by the control 12. For this reason, dotted connections are shown in Fig. 4 between the control 12 and the flaps 81, 82.

In the example shown in the Figures, cooling air circulates just inside of the generator arrangement 1. It is cooled down by means of air-liquid heat exchangers, in which heat is transferred from the cooling air to cooling liquid. This liquid is conveyed to the outside of the generator and to an external heat exchanger by means of pipes (not shown). In case of a wind turbine, this external heat exchanger may be arranged on the top of the nacelle. The wind goes through this external heat exchanger outside the nacelle and cools down the liquid.

In the example shown in the Figures, the fans 40..42 and heat exchangers associated with each fan 40..42 form structural units. However, fans 40..42 and heat exchangers can also be built as separate units. Moreover, the number of fans 40..42 and the number of heat exchangers needs not to be the same. There may also be less or more heat exchangers.

It should also be noted, that the invention is not limited to a circular air flow cooled by a liquid cooling. The air flow may also directed through the generator. Moreover it is noted that the invention may be applied generally to generators. Nevertheless it is beneficially applied to wind turbine applications.

## Claims

1. Electric generator arrangement (1), comprising
- a stator (2),
- a rotor (3),
- a first plurality of cooling fans (41) in a first axial end region (A) of the generator arrangement (1), which in their active state causes a first air flow (F1) through a rotor stator gap (5) between said rotor (3) and said stator (2) and through said stator gaps (6) between axially adjacent segments (7) of said stator (2) via the first axial end region (A) and
- a second plurality of cooling fans (42) in an opposing second axial end region (B) of the generator arrangement (1), which in its active state causes a second air flow (F2) through said rotor stator gap (5) and said stator gaps (6) via the opposing second axial end region (B)
- wherein said air flows (F1, F2) are directed through the stator gaps (6) in the same direction and
- wherein at least one fan (40..42) comprises a flap (80..82) arranged in the air flow (F1, F2), and opening in the active state of said fan (40..42),
**characterized in that**
the electric generator arrangement (1) comprises a control (12) being arranged to activate/deactivate at least a part of the fans (40..42) depending on a temperature of the generator arrangement (1), wherein the number of active fans (40..42) increases when said temperature rises and vice versa, said control (12) being designed to open the flap (80..82) of a fan (40..42) when said fan (40..42) is activated, and to close it when said fan (40..42) is deactivated.

2. Electric generator arrangement (1) as claimed in claim 1, wherein flaps (80..82) are arranged in the air flows (F1, F2) of those fans (40..42), which may be deactivated by said control (12) before all fans (40..42) are switched off.

3. Electric generator arrangement (1) as claimed in any one of the claims 1 or 2, wherein flaps (80..82) are arranged in the air flows (F1, F2) of all said fans (40..42).

4. Electric generator arrangement (1) as claimed in any one of the claims 1 to 3, wherein said flap (80..82) is made of reinforced plastic.

5. Electric generator arrangement (1) as claimed in any one of the claims 1 to 4, wherein said fans (40..42) are arranged inside of the stator (2).

6. Method of controlling an electric generator arrangement (1), which comprises a stator (2), a rotor (3), a first plurality of cooling fans (41) in a first axial end region (A) of the generator arrangement (1), which in their active state causes a first air flow (F1) through said rotor stator gap (5) and through said stator gaps (6) between segments (7) of said stator (2) via the first axial end region (A) and a second plurality of cooling fans (42) in an opposing second axial end region (B) of the generator arrangement (1), which in its active state causes a second air flow (F2) through said rotor stator gap (5) and said stator gaps (6) via the opposing second axial end region (B), wherein said air flows (F1, F2) are directed through the stator gaps (6) in the same direction and wherein a flap (80..82) is arranged in the air flow (F1, F2) of at least one fan (40..42),
comprising the step of
activating/deactivating at least a part of the fans (40..42) depending on a temperature of the generator arrangement (1), wherein the number of active fans (40..42) increases when said temperature rises and vice versa, said control (12), opening a flap (80..82) of a fan (40..42) when said fan (40..42) is activated, and closing it when said fan (40..42) is deactivated.

## Patentansprüche

1. Stromgeneratoranordnung (1), die Folgendes umfasst:
- einen Stator (2),
- einen Rotor (3),
- mehrere erste Kühlgebläse (41) in einem ersten axialen Endbereich (A) der Generatoranordnung (1), die im aktiven Zustand einen ersten Luftstrom (F1) über den ersten axialen Endbereich (A) durch einen Rotor-Stator-Spalt (5) zwischen dem Rotor (3) und dem Stator (2) und durch die Statorspalte (6) zwischen axial benachbarten Segmenten (7) des Stators (2) bewirken, und
- mehrere zweite Kühlgebläse (42) in einem gegenüberliegenden, zweiten axialen Endbereich (B) der Generatoranordnung (1), die im aktiven Zustand einen zweiten Luftstrom (F2) über den gegenüberliegenden, zweiten axialen Endbereich (B) durch den Rotor-Stator-Spalt (5) und die Statorspalte (6) bewirken,
- wobei die Luftströme (F1, F2) in der gleichen Richtung durch die Statorspalte (6) geleitet werden und
- wobei mindestens ein Gebläse (40 bis 42) eine Klappe (80 bis 82) umfasst, die im Luftstrom (F1, F2) angeordnet ist und sich im aktiven Zustand des Gebläses (40 bis 42) öffnet,
**dadurch gekennzeichnet, dass**:
die Stromgeneratoranordnung (1) eine Steuerung (12) umfasst, welche dafür angeordnet ist, dass sie in Abhängigkeit von einer Temperatur der Generatoranordnung (1) zumindest einen Teil der Gebläse (40 bis 42) aktiviert/deaktiviert, wobei sich die Anzahl aktiver Gebläse (40 bis 42) erhöht, wenn die Temperatur steigt, und umgekehrt, wobei die Steuerung (12) so ausgelegt ist, dass sie die Klappe (80 bis 82) eines Gebläses (40 bis 42) öffnet, wenn dieses aktiviert wird, und sie schließt, wenn das Gebläse (40 bis 42) deaktiviert wird.

2. Stromgeneratoranordnung (1) nach Anspruch 1, wobei Klappen (80 bis 82) in den Luftströmen (F1, F2) jener Gebläse (40 bis 42) angeordnet sind, die von der Steuerung (12) deaktiviert werden können, bevor alle Gebläse (40 bis 42) abgeschaltet werden.

3. Stromgeneratoranordnung (1) nach einem der Ansprüche 1 und 2, wobei Klappen (80 bis 82) in den Luftströmen (F1, F2) aller Gebläse (40 bis 42) angeordnet sind.

4. Stromgeneratoranordnung (1) nach einem der Ansprüche 1 bis 3, wobei die Klappe (80 bis 82) aus verstärktem Kunststoff hergestellt ist.

5. Stromgeneratoranordnung (1) nach einem der Ansprüche 1 bis 4, wobei die Gebläse (40 bis 42) im Stator (2) angeordnet sind.

6. Verfahren zum Steuern einer Stromgeneratoranordnung (1), die einen Stator (2), einen Rotor (3), mehrere erste Kühlgebläse (41) in einem ersten axialen Endbereich (A) der Generatoranordnung (1), die im aktiven Zustand einen ersten Luftstrom (F1) über den ersten axialen Endbereich (A) durch den Rotor-Stator-Spalt (5) und durch die Statorspalte (6) zwischen Segmenten (7) des Stators (2) bewirken, und mehrere zweite Kühlgebläse (42) in einem gegenüberliegenden, zweiten axialen Endbereich (B) der Generatoranordnung (1) umfasst, die im aktiven Zustand einen zweiten Luftstrom (F2) über den gegenüberliegenden, zweiten axialen Endbereich (B) durch den Rotor-Stator-Spalt (5) und die Statorspalte (6) bewirken, wobei die Luftströme (F1, F2) in der gleichen Richtung durch die Statorspalte (6) geleitet werden und eine Klappe (80 bis 82) im Luftstrom (F1, F2) mindestens eines Gebläses (40 bis 42) angeordnet ist,
mit folgendem Schritt:
Aktivieren/Deaktivieren zumindest eines Teils der Gebläse (40 bis 42) in Abhängigkeit von einer Temperatur der Generatoranordnung (1), wobei sich die Anzahl aktiver Gebläse (40 bis 42) erhöht, wenn die Temperatur steigt, und umgekehrt, wobei die Steuerung (12) eine Klappe (80 bis 82) eines Gebläses (40 bis 42) öffnet, wenn dieses aktiviert wird, und sie schließt, wenn das Gebläse (40 bis 42) deaktiviert wird.

## Revendications

1. Agencement de générateur électrique (1) comprenant :
- un stator (2) ;
- un rotor (3) ;
- un premier ensemble de ventilateurs de refroidissement (41) dans une première zone terminale axiale (A) de l'agencement de générateur (1), qui, dans leur état actif, génèrent un premier courant d'air (F1) à travers un entrefer de rotor/stator (5) entre ledit rotor (3) et ledit stator (2) et à travers lesdits entrefers de stator (6) entre des segments (7) dudit stator (2), adjacents en direction axiale, via la première zone terminale axiale (A) ; et
- un second ensemble de ventilateurs de refroidissement (42) dans une seconde zone terminale axiale opposée (B) de l'agencement de générateur (1), qui, dans leur état actif, génèrent un second courant d'air (F2) à travers ledit entrefer de rotor/stator (5) et lesdits entrefers de stator (6) via la seconde zone terminale axiale opposée (B) ;
- dans lequel lesdits écoulements d'air (F1, F2) sont orientés à travers les entrefers de stator (6) dans la même direction ; et
- dans lequel au moins un ventilateur (40..42) comprend un volet (80..82) disposé dans le courant d'air (F1, F2) et s'ouvrant dans l'état actif dudit ventilateur (40..42) ;
**caractérisé en ce que** l'agencement de générateur électrique (1) comprend une commande (12) qui est conçue pour activer/désactiver au moins une partie des ventilateurs (40..42) en fonction d'une température de l'agencement de générateur (1) ; dans lequel le nombre de ventilateurs actifs (40..42) augmente lorsque ladite température s'élève et vice versa, ladite commande (12) étant conçue pour ouvrir le volet (80..82) d'un ventilateur (40..42) lorsque ledit ventilateur (40..42) est activé et pour le fermer lorsque ledit ventilateur (40..42) est désactivé.

2. Agencement de générateur électrique (1) selon la revendication 1, dans lequel des volets (80..82) sont disposés dans les courants d'air (F1, F2) de ces ventilateurs (40..42), qui peuvent être désactivés par ladite commande (12) avant la mise hors circuit de tous les ventilateurs (40..42).

3. Agencement de générateur électrique (1) selon l'une quelconque des revendications 1 ou 2, dans lequel des volets (80..82) sont disposés dans les courants d'air (F1, F2) de l'ensemble desdits ventilateurs (40..42).

4. Agencement de générateur électrique (1) selon l'une quelconque des revendications 1 à 3, dans lequel ledit volet (80..82) est réalisé à partir d'une matière plastique renforcée.

5. Agencement de générateur électrique (1) selon l'une quelconque des revendications 1 à 4, dans lequel lesdits ventilateurs (40..42) sont disposés à l'intérieur du stator (2) .

6. Procédé de commande d'un agencement de générateur électrique (1), qui comprend un stator (2), un rotor (3), un premier ensemble de ventilateurs de refroidissement (41) dans une première zone terminale axiale (A) de l'agencement de générateur (1), qui, dans leur état actif, génèrent un premier courant d'air (F1) à travers ledit entrefer de rotor/stator (5) et à travers lesdits entrefers de stator (6) entre des segments (7) dudit stator (2) via la première zone terminale axiale (A), et un second ensemble de ventilateurs de refroidissement (42) dans une seconde zone terminale axiale opposée (B) de l'agencement de générateur (1), qui, dans leur état actif, génèrent un second courant d'air (F2) à travers ledit entrefer de rotor/stator (5) et lesdits entrefers de stator (6) via la seconde zone terminale axiale opposée (B) ; dans lequel lesdits écoulements d'air (F1, F2) sont orientés à travers les entrefers de stator (6) dans la même direction ; et dans lequel un volet (80..82) est disposé dans le courant d'air (F1, F2) d'au moins un ventilateur (40..42) ; comprenant l'étape dans laquelle on active/désactive au moins une partie des ventilateurs (40..42) en fonction d'une température de l'agencement de générateur (1) ; dans lequel le nombre de ventilateurs actifs (40..42) augmente lorsque ladite température s'élève et vice versa, ladite commande (12) ouvrant un volet (80..82) d'un ventilateur (40..42) lorsque ledit ventilateur (40..42) est activé et le fermant lorsque ledit ventilateur (40..42) est désactivé.
